# EUROPÄISCHE PATENTANMELDUNG

(11) **EP 4 748 598 A1**
(43) Veröffentlichungstag der Anmeldung: **27.05.2026**
(21) Anmeldenummer: 25210513.5
(22) Anmeldetag: 22.10.2025
(51) Int. Cl.: B60H 1/00, B60H 1/22

(54) **VORSTEUERVERFAHREN ZUR MODELLBASIERTEN EINSTELLUNG EINER WARMPFADTEMPERATUR IN EINER KLIMATISIERUNGSEINHEIT EINES KRAFTFAHRZEUGS**

(30) Priorität: 21.11.2024 DE 102024134280
(71) Anmelder: AUDI AG, 85057 Ingolstadt (DE)
(72) Erfinder: Jonuscheit, Michael, 96163 Gundelsheim (DE); Kirchhoff, Ralph, 85080 Gaimersheim (DE)

(57) **Zusammenfassung**

Beschrieben wird ein Vorsteuerverfahren (500) für die Einstellung einer Warmpfadtemperatur in einer Klimatisierungseinheit eines Kraftfahrzeugs, wobei das Vorsteuerverfahren (500) folgende Schritte aufweist: Modellbasiertes Einstellen (S501) eines ersten Warmpfad-Temperatursollwerts (TWs) in Abhängigkeit von wenigstens einem außerhalb des Warmpfads erfassten Klimatisierungsparameters; Einstellen einer elektrischen Leistungsaufnahme von wenigstens einem elektrischen Heizelement in Abhängigkeit von dem ersten Warmpfad-Temperatursollwert; Modellbasierte Berechnung eines Warmpfad-Temperaturmodellwerts; Vergleichen des Warmpfad-Temperaturmodellwerts mit dem Warmpfad-Temperatursollwert; Bestimmen (S505) eines Anfangszeitpunkts (t0), wenn der Warmpfad-Temperaturmodellwert (TWm) einen unteren oder oberen Grenzsoll-wert (Tgu, Tgo) erreicht, wobei der untere und obere Grenzsollwert (Tgu, Tgu) ein Temperaturband um den ersten Warmpfad-Temperatursollwert (WTs) bilden; Bestimmen einer Zeitdauer (td) seit dem Anfangszeitpunkt (t0) bis zu einem vorbestimmten Endzeitpunkt (t1), sofern der Warmpfad-Temperaturmodellwert (TWm) innerhalb des Temperaturbands liegt; wobei beim Erreichen (S507) des Endzeitpunkts (t1) ein erneutes modellbasiertes Einstellen (S501) des ersten Warmpfad-Temperatursollwerts (TWs) in Abhängigkeit von wenigstens einem außerhalb des Warmpfads (106) erfassten Klimatisierungsparameters (KP) erfolgt.

## Beschreibung

Die Erfindung betrifft ein Vorsteuerverfahren für die Einstellung einer Warmpfadtemperatur in einer Klimatisierungseinheit eines Kraftfahrzeug, eine Klimatisierungseinheit mit einer Steuereinheit zur Durchführung des Vorsteuerverfahrens und ein Kraftfahrzeug mit einer solchen Klimatisierungseinheit.

Die Ausblas-Temperaturregelung in einer Klimatisierungseinheit, die auch als Klimagerät bezeichnet werden kann, wird insbesondere über ein Mischungsverhältnis von zwei Luftmassenströmen eingestellt. Hierbei handelt es sich einerseits um den einen sogenannte Frischluft-Massenstrom (kalt) und einem Luftmassenstrom im Warmpfad, welcher durch eine oder mehrere Heizeinrichtungen bzw. -quellen strömt (warm/heiß). Das Mischungsverhältnis wird aktiv über sogenannte Temperaturklappen, eingeregelt, um die gewünschte Ausblas-Temperatur einzustellen. Für eine komfortable Klimatisierung ist es ebenfalls notwendig die gewünschte Ausblas-Temperatur bei einem bestimmten Mischungsverhältnis einzustellen, was auch unter dem Begriff die Schichtung bekannt ist. Um diese Schichtung zu erreichen, wird dem Warmpfad-Massenstrom eine Solltemperatur vorgegeben, um bei einem gewünschten Mischungsverhältnis die Ausblas-Temperatur zu erreichen. Diese Solltemperatur wird in bisher bekannten Klimatisierungseinheiten in einem unterlagerten Regelkreis im Warmpfad auf Basis von mehreren Temperaturmessstellen bzw. Temperatursensoren stromabwärts von der Heizeinrichtung bzw. Wärmequelle eingeregelt.

Es hat sich gezeigt, dass es in der praktischen Anwendung schwierig den Warmpfad-Sollwert zu bestimmen, da die exakten Massenströme nicht bekannt sind. Um Ungenauigkeiten zu kompensieren ist es daher bekannt, den der Warmpfad-Sollwert in einer Regelung immer wieder anzupassen, um die gewünschte Ausblas-Temperatur bei einem gewünschtem Mischungsverhältnis zu erreichen.

Für derartiges Vorgehen ist insbesondere unterlagerter Regelkreis an der Wärmequelle notwendig, der mehrere Temperatursensoren (bis zu acht Stück) aufweist. Ferner weist ein solches Vorgehen eine hohe Schwingungsneigung der gekoppelten Regelkreise bei mittlerer Einregelungsgeschwindigkeit auf. Dies zeigt sich insbesondere bei einer Veränderung der Luftmassenströme oder/und eine Veränderungen der Ausblas-Temperatur-Sollwerte oder/und bei einem Erreichen von Stellbegrenzungen (Leistung).

Die der Erfindung zu Grunde liegende Aufgabe wird darin gesehen, ein Verfahren anzugeben, das die obigen Nachteile vermeidet und insbesondere auch zu einer konstruktiven Vereinfachung der Klimatisierungseinheit führt.

Diese Aufgabe wird gelöst durch Vorsteuerverfahren, eine Klimatisierungseinheit und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also ein Vorsteuerverfahren für die Einstellung einer Warmpfadtemperatur in einer Klimatisierungseinheit eines Kraftfahrzeug, wobei das Vorsteuerverfahren folgende Schritte aufweist:
Modellbasiertes Einstellen eines ersten Warmpfad-Temperatursollwerts in Abhängigkeit von wenigstens einem außerhalb des Warmpfads erfassten Klimatisierungsparameters;
Einstellen einer elektrischen Leistungsaufnahme von wenigstens einem elektrischen Heizelement in Abhängigkeit von dem ersten Warm-pfad-Temperatursollwert;
Modellbasierte Berechnung eines Warmpfad-Temperaturmodellwerts;
Vergleichen des Warmpfad-Temperaturmodellwerts mit dem Warmpfad-Temperatursollwert;
Bestimmen eines Anfangszeitpunkts, wenn der Warmpfad-Temperaturmodellwert einen unteren oder oberen Grenzsollwert erreicht, wobei der untere und obere Grenzsollwert ein Temperaturband um den ersten Warmpfad-Temperatursollwert bilden;
Bestimmen einer Zeitdauer seit dem Anfangszeitpunkt bis zu einem vorbestimmten Endzeitpunkt, sofern der Warmpfad-Temperaturmodellwert innerhalb des Temperaturbands liegt;
wobei beim Erreichen des Endzeitpunkts ein erneutes modellbasiertes Einstellen des ersten Warmpfad-Temperatursollwert in Abhängigkeit von wenigstens einem außerhalb des Warmpfads erfassten Klimatisierungsparameters erfolgt.

Durch ein derartiges insbesondere modellbasiertes Vorsteuerverfahren kann auf einen unterlagerten Regelkreis mit mehreren stromabwärts von der Heizeinrichtung angeordneten Temperatursensoren verzichtet werden, so dass eine Klimatisierungseinheit mit einem vereinfachter und kostengünstigeren Aufbau erreicht wird. Anders ausgedrückt ersetzt ein solches Vorsteuerverfahren den Regelkreis für die Einstellung einer Warmpfadtemperatur. Ferner wird durch ein solches Vorsteuerverfahren die Schwingungsneigung reduziert.

Eine notwendige Genauigkeit der tatsächlichen Warmpfadtemperatur wird dabei über ein iteratives Vorgehen erreicht, wobei der erste Warmpfad-Temperatursollwert wiederholt eingestellt bzw. angepasst wird, wenn der Warmpfad-Temperaturmodellwert während einer bestimmten Zeitdauer innerhalb des Temperaturbands bleibt, was in der Regel nur dann auftritt, wenn ein bestimmter Betriebspunkt der Klimatisierungseinheit erreicht ist, in der sich der modellbasierten Vorsteuerung zu Grunde liegende Parameter nicht oder nur wenig verändern.

Bei dem Vorsteuerverfahren können als Klimatisierungsparameter eine oder mehrere der folgenden Größen verwendet werden: eine Lufttemperatur vor Eintritt in den Warmpfad, eine Umgebungslufttemperatur, ein in den Warmluftpfad geförderten Luftmassenstrom, eine Innenraumlufttemperatur, eine Stellung einer Temperaturklappe der Klimatisierungseinheit. Ferner können auch aktive Leistungsbegrenzungen berücksichtigt werden, wie beispielsweise ein maximaler oder minimaler geförderter Luftmassenstrom, eine maximale oder minimale Leistungsaufnahme in einer Heizvorrichtung und dergleichen.

Bei dem Vorsteuerverfahren können der untere Grenzsollwert und der obere Grenzsollwert ein Temperaturband von etwa 4 bis 6°C um den Warmpfad-Temperatursollwert bilden, so dass der Anfangszeitpunkt bestimmt wird, wenn ein Betrag einer Differenz zwischen dem Warmpfad-Temperaturmodellwert und dem Warmpfad-Temperatursollwert 2 oder 3°C beträgt.

Vorgeschlagen wird ferner eine Klimatisierungseinheit für ein Kraftfahrzeug mit wenigstens einer Lüftereinrichtung; wenigstens einem mit einer Kälteanlage verbundenen Verdampfer; wenigstens einer stromabwärts von dem Verdampfer angeordneten Heizeinrichtung, insbesondere einem mit der Kälteanlage verbundenen Heizregister oder und wenigstens einem elektrischen Heizelement, wobei die Heizeinrichtung innerhalb eines Warmpfads der Klimatisierungseinheit angeordnet ist; wenigstens einem den Warmpfad umgehenden Kaltpfad; wenigstens einer stromabwärts von dem Warmpfad und dem Kaltpfad angeordneten Temperaturklappe; einem stromabwärts von den Temperaturklappen ausgebildeten Mischraum; und mit mehreren mit einem Innenraum des Kraftfahrzeugs fluidtechnisch in Verbindung bringbaren Ausströmern; wobei die Klimatisierungseinheit eine Steuereinheit aufweist, die dazu eingerichtet das oben beschriebene insbesondere modellbasierte Vorsteuerverfahren durchzuführen.

Die Klimatisierungseinheit kann stromabwärts von der Heizeinrichtung und stromaufwärts von der dem Warmpfad zugeordneten Temperaturklappe frei von Sensoreinrichtungen zur Temperaturmessung der mittels der Heizeinrichtung erzeugten Warmluft sein.

Ferner kann die Klimatisierungseinheit stromaufwärts von der Heizeinrichtung und stromabwärts von den Temperaturklappen, insbesondere im Bereich eines betreffenden Ausströmers, wenigstens einen jeweiligen Temperatursensor aufweisen.

Anders ausgedrückt sind im Warmpfad stromabwärts bzw. ausgangsseitig von der Heizeinrichtung keine Temperatursensoren angeordnet, weil diese nicht notwendig sein, wenn die Steuereinheit dazu in der Lage ist, den Warmpfad-Temperaturmodellwert modellbasiert zu ermitteln und diesen mit dem Warmpfad-Temperatursollwert zu vergleichen.

Ferner wird ein Kraftfahrzeug mit einer Kälteanlage und mit einer oben beschriebenen Klimatisierungseinheit vorgeschlagen.

Weitere Vorteile und Einzelheiten der Erfindung ergeben sich aus der nachfolgenden Beschreibung von Beispielen, die auch Ausführungsformen sein können, unter Bezugnahme auf die Figuren. Dabei zeigt:
- Fig. 1: eine vereinfachte und schematische Darstellung einer Klimatisierungseinheit in einem Kraftfahrzeug;
- Fig. 2: ein vereinfachtes und schematisches Ablaufschema einer Vorsteuerverfahrens;
- Fig. 3: zwei vereinfachte und schematisch Zeit-/Temperatur-Diagramme zur Veranschaulichung des Vorsteuerverfahrens.

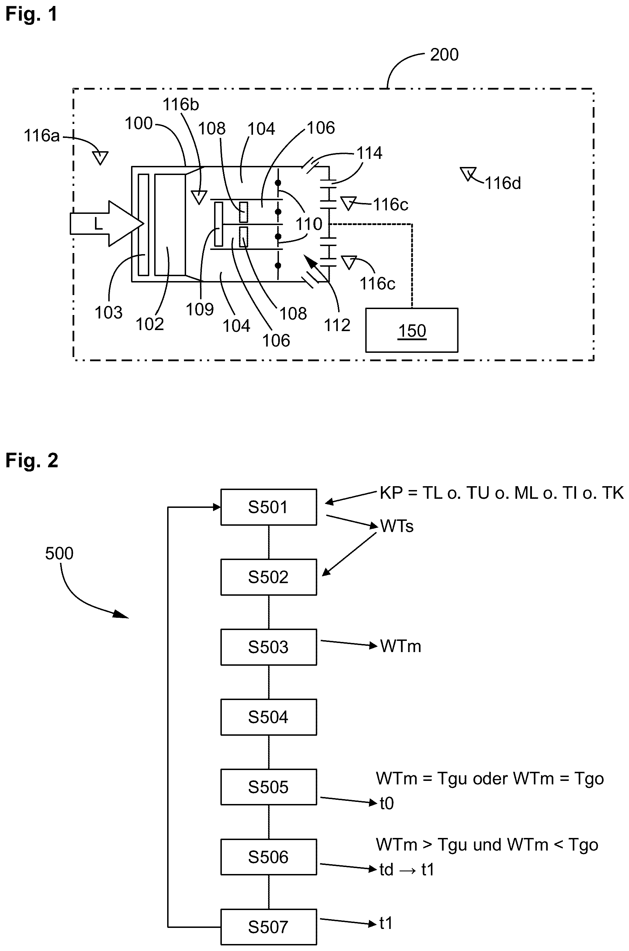

In Fig. 1 ist stark vereinfacht und schematisch ein Kraftfahrzeug 200 dargestellt mit einer ebenfalls nur schematisiert illustrierten Klimatisierungseinheit 100.

Die Klimatisierungseinheit 100 umfasst wenigstens einen Wärmeübertrager 102, insbesondere einen Verdampfer zum Kühlen oder/und Entfeuchten von zugeführter Luft L. Die Luft L bzw. ein Luftmassenstrom wird insbesondere durch einen Lüfter bzw. ein Gebläse 103 gefördert. Stromabwärts von dem Verdampfer 102 sind vereinfacht Luftkanäle 104 für gekühlte Luft, die auch als Kaltpfad bezeichnet werden können, und Luftkanäle 106 für zu erwärmende Luft, die auch als Warmpfad bezeichnet werden können, gezeigt.

Die Klimatisierungseinheit 100 weist in den Luftkanälen 106 bzw. im Warmpfad elektrische Heizelemente 108 auf, die dazu eingerichtet sind, die zugeführte Luft L bedarfsweise zu erwärmen. Alternativ oder ergänzend kann im Warmpfad insbesondere stromaufwärts von den elektrischen Heizelementen 108 ein mit einer Kälteanlage des Kraftfahrzeugs 200 verbundener Wärmeübertrager 109, insbesondere ein Heizregister angeordnet sein. Der Wärmeübertrager 109 oder/und die Heizelemente 108 können allgemeiner als Heizeinrichtung der Klimatisierungseinheit 100 bezeichnet werden.

Die Luftkanäle 104, 106 können mittels Stellelementen 110, wie etwa Klappen oder dergleichen (teilweise) freigegeben oder (teilweise) geschlossen werden. Hierdurch kann eine durch einen jeweiligen Luftkanal 104, 106 hindurch strömendes Luftvolumen eingestellt werden. Die Stellelemente 110 können auch Temperaturklappen bezeichnet werden.

Stromabwärts von den Temperaturklappen 110 ist ein Mischraum 112 angeordnet, in dem aus dem Warmpfad 106 bzw. dem Kaltpfad 104 eingeführte Luft zumindest teilweise gemischt bzw. geschichtet wird.

Die Klimatisierungseinheit 100 weist ferner mehrere mit einem Innenraum des Kraftfahrzeugs 200 fluidtechnisch in Verbindung bringbare oder in Verbindung stehende Ausströmer 114 auf.

Die Klimatisierungseinheit 100 umfasst ferner eine Steuereinheit 150, die dazu eingerichtet ist, einzelne Komponenten der Klimatisierungseinheit 100, wie beispielsweise eine mit dem Verdampfer 102 und dem Heizregister 109 verbundene Kälteanlage oder/und die elektrischen Heizelemente 108, anzusteuern. Die Steuereinheit 150 kann auch Teil eine übergeordneten Fahrzeugsteuereinheit sein.

Die Klimatisierungseinheit 100 kann ferner mehrere Temperatursensoren aufweisen. Beispielsweise kann ein Temperatursensor 116a dazu vorgesehen sein, eine Lufttemperatur vor Eintritt in den Warmpfad 106 zu erfassen. Beispielweise kann ein Temperatursensor 116b dazu vorgesehen sein, eine Umgebungslufttemperatur zu erfassen. Ferner können den Ausströmern 114 jeweilige Temperatursensoren 116c zugeordnet sein, um eine jeweilige Ausströmlufttemperatur zu erfassen. In einem Innenraum des Kraftfahrzeugs 200 kann beispielswiese einen Innenraum-Lufttemperaursensor 116d vorgesehen sein.

Es wird darauf hingewiesen, dass in der Fig. 1 aus Gründen der besseren Sichtbarkeit nicht bei allen Ausströmern das Bezugszeichen 114 dargestellt ist und dass auch nicht bei jedem Ausströmer ein Temperatursensor 116c dargestellt ist.

Die in der Klimatisierungseinheit 100 beispielhaft gezeigten Temperatursensoren 116a-d sind alle außerhalb des Warmpfads 106 angeordnet. Anders ausgedrückt, ist der Warmpfad 106 insbesondere stromabwärts von dem Heizregister 109 oder/und stromabwärts von den elektrischen Heizelementen 108 sowie stromaufwärts von den Temperaturklappen 110 frei von Temperatursensoren, die eine Lufttemperatur im Warmluftpfad 106 erfassen.

In Fig. 2 ist ein vereinfachter und schematischer Ablauf eines Vorsteuerverfahrens 500 für eine Klimatisierungseinheit 100 dargestellt. Ein solches Vorsteuerverfahren kann insbesondere mittels der Steuereinheit 150 umgesetzt bzw. implementiert sein.

Bei dem Vorsteuerverfahren 500 erfolgt gemäß einem Schritt S501 ein modellbasiertes Einstellen eines ersten Warmpfad-Temperatursollwerts WTs in Abhängigkeit von wenigstens einem außerhalb des Warmpfads 106 erfassten Klimatisierungsparameters KP.

Gemäß einem Schritt S502 erfolgt ein Einstellen einer elektrischen Leistungsaufnahme von wenigstens einem elektrischen Heizelement 108 in Abhängigkeit von dem ersten Warmpfad-Temperatursollwert WTs.

In einem Schritt S503 erfolgt eine modellbasierte Berechnung eines Warmpfad-Temperaturmodellwerts WTm.

In einem Schritt S504 erfolgt ein Vergleichen des Warmpfad-Temperaturmodellwerts WTm mit dem Warmpfad-Temperatursollwert WTs.

In einem Schritt S505 wird ein Anfangszeitpunkt t0 bestimmt, wenn der Warmpfad-Temperaturmodellwert WTm einen unteren oder oberen Grenzsollwert Tgu, Tgo erreicht, wobei der untere und obere Grenzsollwert Tgu, Tgo ein Temperaturband um den ersten Warmpfad-Temperatursollwert WTs bilden.

Gemäß einem Schritt S506 erfolgt ein Bestimmen einer Zeitdauer td seit dem Anfangszeitpunkt t0 bis zu einem vorbestimmten Endzeitpunkt t1, sofern der Warmpfad-Temperaturmodellwert WTm innerhalb des Temperaturbands liegt.

Gemäß einem Schritt S507 wird der Endzeitpunkts t1 erreicht und das Verfahren kehrt zu dem Schritt S501 zurück, in dem ein erneutes modellbasiertes Einstellen des ersten Warmpfad-Temperatursollwerts WTs in Abhängigkeit von wenigstens einem außerhalb des Warmpfads 106 erfassten Klimatisierungsparameters erfolgt.

Der als Eingangsgröße im Schritt S501 eingesetzte, wenigstens eine Klimatisierungsparameter KP kann beispielsweise eine oder mehrere der folgenden Größen sein: eine Lufttemperatur TL vor Eintritt in den Warmpfad 106, eine Umgebungslufttemperatur TU, ein in den Warmluftpfad geförderten Luftmassenstrom mL, eine Innenraumlufttemperatur TI, eine Stellung TK einer Temperaturklappe 110 der Klimatisierungseinheit 100.

Bei dem Vorsteuerverfahren 500 können der untere Grenzsollwert Tgu und der obere Grenzsollwert Tgo ein Temperaturband von etwa 4 bis 6°C um den Warmpfad-Temperatursollwert WTs bilden, so dass der Anfangszeitpunkt t0 bestimmt wird, wenn ein Betrag einer Differenz zwischen dem Warmpfad-Temperaturmodellwert WTm und dem Warmpfad-Temperatursollwert WTs 2 oder 3°C beträgt. Anders ausgedrückt wird t0 festgelegt, wenn | WTm - WTs | = 2 bzw. 3 oder | WTs - WTm | = 2 bzw. 3

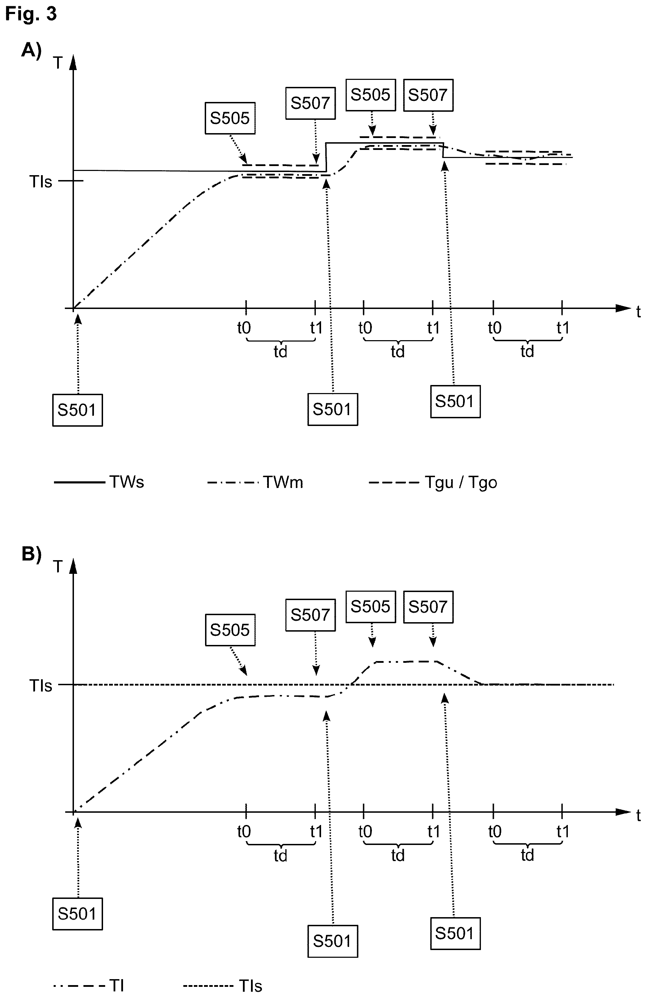

Das oben beschriebene Vorsteuerverfahren 500 wird nachfolgend anhand von zwei Temperatur-/Zeit-Diagrammen der Fig. 3 erläutert.

In dem Diagramm der Fig. 3A ist der Warmpfad-Temperatursollwert TWs als durchgezogenen schwarze Linie dargestellt. Der modellbasiert ermittelte Warmpfad-Temperaturmodellwert WTm ist strichpunktiert dargestellt. Ein beispielsweise im Fahrzeuginnenraum zu erreichender Innenraum-Temperatursollwert TIs, der auch als Klima-Temperatursollwert verstanden bzw. bezeichnet werden kann, ist auf der vertikalen Achse eingetragen. Die unteren und oberen Grenzsollwerte Tgu und Tgo sind jeweils länger gestrichelt dargestellt oberhalb und unterhalb der Kurve für den Warmpfad-Temperatursollwert TWs.

In dem Diagramm der Fig. 3B ist der Innenraum-Temperatursollwert Tis als eng gestrichelte Linie dargestellt. Der Verlauf eines gemessenen Innenraum-Temperaturwerts TI ist strichpunktiert dargestellt (drei Linien, zwei Punkte).

Ferner sind im Diagramm der Fig. 3 teilweise die Schritte gemäß dem oben beschriebenen Verfahren 500 dargestellt, insbesondere die Schritte S501, S505 und S507.

Ausgehend von einem Startpunkt, der im Ursprung der Diagramme der Fig. 3 liegt, wird bei dem Vorsteuerverfahren der Schritt S501 ausgeführt. Beispielsweise wird ein zu erreichender Innenraum-Temperaturwert Tis vorgegeben. An der Klimatisierungseinheit 100 werden mittels der Steuereinheit 150 Einstellungen vorgenommen, wie beispielweise eine bestimmte Leistungsaufnahme in den elektrischen Heizelementen 108, eine bestimmte Luftstrommenge mittels des Gebläses 103 und dergleichen.

Basierend auf einem oder mehreren solchen Klimatisierungsparametren KP wird ein Warmpfad-Temperatursollwert TWs bestimmt bzw. festgelegt (durchgezogene Linie in Fig. 3A) und fortlaufend eine modellbasierte Entwicklung des Warmpfad-Temperaturmodellwerts TWm berechnet (strichpunktierte Linie in Fig 3A).

Erreicht der modellbasiert berechnete Warmpfad-Temperaturmodellwert TWm den unteren Grenzsollwert Tgu (Schritt S505) wird ein Anfangszeitpunkt t0 bestimmt. Bleibt der berechnete Warmpfad-Temperaturmodellwert TWm innerhalb des Temperaturbandes, das von den Grenzsollwerten Tgu und Tgo gebildet wird, wird davon ausgegangen, dass ein stabiler Betriebszustand erreicht ist. Es wird überwacht, ob dieser stabile Betriebszustand während einer bestimmten Zeitdauer td vorliegt und dann ein Endzeitpunkt t1 erreicht wird.

Ist dies der Fall, etwa zum Endzeitpunkt t1; kann verglichen werden, ob der Innenraum-Temperaturwert TI bereits den Innenraum-Temperatursollwert TIs erreicht hat, was in Fig. 3B ersichtlich ist. Dies ist nach der ersten stabilen Betriebsphase in Fig. 3A bzw. Fig. 3B augenscheinlich noch nicht der Fall. Dabei ist zu berücksichtigen, dass die Innenraum-Temperatur TI eine Mischtemperatur mit Wärmeverlusten darstellt

Der Vorteil der Modelltemperatur-Überwachung, also von TWm in Relation zur TWs, liegt insbesondere darin, dass Störungen bzw. Einschränkungen in der Klimatisierungseinheit 100 erkannt werden können, wie beispielsweise, ob durch die elektrischen Heizelemente 108 überhaupt genug Leistung zur Verfügung steht um den Luftmassenstrom L auf das Setpoint-Niveau zu erwärmen.

Bezogen auf die Fig. 3B bedeutet dies, dass zum ersten Zeitpunkt t0 zunächst festgestellt wird, dass bis hier noch keine ausreichende Leistung bzw. Energie zur Verfügung gestellt werden konnte, um den Innenraum-Temperatursollwert TIs erreichen zu können.

Während des stabilen Betriebszustands (t0 bis t1) kann beispielsweise überprüft werden, ob eine Erhöhung der Leistungsaufnahme an den Heizelementen 108 systemseitig überhaupt möglich ist, insbesondere ausreichend elektrische Energie bereitgestellt werden kann, die nicht anderweitig im Kraftfahrzeug gebraucht wird.

Es wird erneut der Schritt S501 durchgeführt und der Warmpfad-Temperatursollwert WTs auf ein höheres Niveau eingestellt basierend auf erneut erfassten Klimatisierungsparametern. Entsprechend der neuen Einstellungen wird fortlaufend und modellbasiert der Warmpfad-Temperaturmodellwert TWm berechnet, bis dieser erneut den unteren Grenzsollwert Tgu erreicht (zweiten Temperaturband in Fig. 3A). Es wiederholt sich die Prüfung auf einen stabilen Betriebszustand durch bestimmten des Anfangszeitpunkt t0, der Zeitdauer td und des Endzeitpunkts t1.

Der dann gemessenen Innenraum-Temperaturwert TI ist zu diesem Zeitpunkt höher als der Innenraum-Temperatursollwert TIs (Fig. 3B), so dass erneut eine Anpassung erfolgt durch Ausführen des Verfahrens 500 beginnend mit dem Schritt S501.

Aus der Fig. 3A ist also ersichtlich, dass das Vorsteuerverfahren 500 mit dem modellbasiert berechneten Warmpfad-Temperaturmodellwert TWm wiederholt bzw. iterativ durchgeführt wird, wenn ein stabiler Betriebszustand erreicht ist.

Basierend auf diesem Vorgehen ist es möglich auf Temperatursensoren zu verzichten, welche üblicherweise stromabwärts von den Heizelementen 108 oder/und stromabwärts von dem Heizregister 109 sowie stromaufwärts von der Temperaturklappe 110 angeordnet sind.

## Patentansprüche

1. Vorsteuerverfahren (500) für die Einstellung einer Warmpfadtemperatur in einer Klimatisierungseinheit (100) eines Kraftfahrzeug (200), wobei das Vorsteuerverfahren (500) folgende Schritte aufweist:
Modellbasiertes Einstellen (S501) eines ersten Warmpfad-Temperatursollwerts (TWs) in Abhängigkeit von wenigstens einem außerhalb des Warmpfads (106) erfassten Klimatisierungsparameters (KP);
Einstellen (S502) einer elektrischen Leistungsaufnahme von wenigstens einem elektrischen Heizelement (108) in Abhängigkeit von dem ersten Warmpfad-Temperatursollwert (TWs);
Modellbasierte Berechnung (S503) eines Warmpfad-Temperaturmodellwerts (TWm);
Vergleichen (S504) des Warmpfad-Temperaturmodellwerts (TWm) mit dem Warmpfad-Temperatursollwert (TWs);
Bestimmen (S505) eines Anfangszeitpunkts (t0), wenn der Warmpfad-Temperaturmodellwert (TWm) einen unteren oder oberen Grenzsollwert (Tgu, Tgo) erreicht, wobei der untere und obere Grenzsollwert (Tgu, Tgu) ein Temperaturband um den ersten Warmpfad-Temperatursollwert (WTs) bilden;
Bestimmen (S506) einer Zeitdauer (td) seit dem Anfangszeitpunkt (t0) bis zu einem vorbestimmten Endzeitpunkt (t1), sofern der Warmpfad-Temperaturmodellwert (TWm) innerhalb des Temperaturbands liegt;
wobei beim Erreichen (S507) des Endzeitpunkts (t1) ein erneutes modellbasiertes Einstellen (S501) des ersten Warmpfad-Temperatursollwerts (TWs) in Abhängigkeit von wenigstens einem außerhalb des Warmpfads (106) erfassten Klimatisierungsparameters (KP) erfolgt.

2. Vorsteuerverfahren (500) nach Anspruch 1, wobei als Klimatisierungsparameter (KP) eine oder mehrere der folgenden Größen verwendet wird: eine Lufttemperatur (TL) vor Eintritt in den Warmpfad (106), eine Umgebungslufttemperatur (TU), ein in den Warmluftpfad (106) geförderten Luftmassenstrom (ML), eine Innenraumlufttemperatur (TI), eine Stellung (TK) einer Temperaturklappe (110) der Klimatisierungseinheit (100).

3. Vorsteuerverfahren (500) nach Anspruch 1 oder 2, wobei der untere Grenzsollwert (Tgu) und der obere Grenzsollwert (Tgo) ein Temperaturband von etwa 4 bis 6°C um den Warmpfad-Temperatursollwert (TWs) bilden, so dass der Anfangszeitpunkt (t0) bestimmt wird, wenn ein Betrag einer Differenz zwischen dem Warmpfad-Temperaturmodellwert (TWm) und dem Warmpfad-Temperatursollwert (TWs) 2 oder 3°C beträgt.

4. Klimatisierungseinheit (100) für ein Kraftfahrzeug (200) mit
wenigstens einer Lüftereinrichtung (103);
wenigstens einem mit einer Kälteanlage verbundenen Verdampfer (102);
wenigstens einer stromabwärts von dem Verdampfer (102) angeordneten Heizeinrichtung (108, 109), insbesondere einem mit der Kälteanlage verbundenen Heizregister (109) oder und wenigstens einem elektrischen Heizelement (108),
wobei die Heizeinrichtung (108, 109) innerhalb eines Warmpfads (106) der Klimatisierungseinheit (100) angeordnet ist;
wenigstens einem den Warmpfad (106) umgehenden Kaltpfad (104); wenigstens einer stromabwärts von dem Warmpfad (106) und dem Kaltpfad (104) angeordneten Temperaturklappe (110);
einem stromabwärts von den Temperaturklappen (110) ausgebildeten Mischraum (112);
mehreren mit einem Innenraum des Kraftfahrzeugs (200) fluidtechnisch in Verbindung bringbaren Ausströmern (114);
wobei die Klimatisierungseinheit (100) eine Steuereinheit (150) aufweist, die dazu eingerichtet das Vorsteuerverfahren (500) gemäß einem der vorhergehenden Ansprüche durchzuführen.

5. Klimatisierungseinheit (100) nach Anspruch 4, wobei sie stromabwärts von der Heizeinrichtung (108, 109) und stromaufwärts von der dem Warmpfad (106) zugeordneten Temperaturklappe (110) frei von Sensoreinrichtungen zur Temperaturmessung der mittels der Heizeinrichtung (108, 109) erzeugten Warmluft ist.

6. Klimatisierungseinheit (100) nach Anspruch 4 oder 5, wobei sie stromaufwärts von der Heizeinrichtung (108, 109) und stromabwärts von den Temperaturklappen (110), insbesondere im Bereich eines betreffenden Ausströmers (114), wenigstens einen jeweiligen Temperatursensor (116a-d) aufweist.

7. Kraftfahrzeug (200) mit einer Kälteanlage und mit einer Klimatisierungseinheit (100) gemäß einem der Ansprüche 4 bis 6.
